# EUROPEAN PATENT SPECIFICATION

(11) **EP 2 523 233 B1**
(45) Date of publication and mention of the grant of the patent: **20.09.2017**
(21) Application number: 10842080.3
(22) Date of filing: 28.12.2010
(51) Int. Cl.: H01M 2/02, C25D 5/14, C25D 7/00, C25D 5/36, C25D 3/12, C25D 5/50

(54) **NI-PLATED STEEL SHEET WITH EXCELLENT PRESSABILITY FOR BATTERY CAN**
NICKELPLATTIERTES STAHLBLECH MIT HERVORRAGENDER PRESSBARKEIT FÜR EINE BATTERIEDOSE
FEUILLE D'ACIER PLAQUÉE AU NICKEL AVEC EXCELLENTE APTITUDE AU PRESSAGE POUR BOÎTE DE PILE OU BATTERIE

(30) Priority: 08.01.2010 JP 2010003410
(43) Date of publication of application: 14.11.2012
(73) Proprietor: Toyo Kohan Co., Ltd., Tokyo 102-8447 (JP)
(72) Inventor: MINAGI, Hideyuki, Kudamatsu-shi Yamaguchi 744-8611 (JP); OKAMATSU, Eiji, Kudamatsu-shi Yamaguchi 744-8611 (JP)
(74) Representative: Vossius & Partner Patentanwälte Rechtsanwälte mbB
(86) International application number: PCT/JP2010/007609
(87) International publication number: WO 2011/083562

(56) References cited:
- EP-A1- 2 472 631
- JP-A- 2002 050 324
- JP-A- 2002 155 394
- JP-A- 2004 218 043
- JP-A- 2005 085 480
- JP-A- 2005 149 735
- JP-A- 2006 137 988
- JP-A- 2007 302 934

## Description

### BACKGROUND ART

Conventionally, a Ni-plated steel sheet has been popularly used as a material for manufacturing battery cans. As properties which such a Ni-plated steel sheet for manufacturing an alkali battery can is required to possess, the stable press formability is required along with the excellent battery characteristic and the excellent corrosion resistance. As the stable press formability, a characteristic that the scratches are not formed on a can at the time of can making, a characteristic that no seizure is generated on a mold at the time of press forming or the like is named.

Accordingly, as a characteristic of a material for manufacturing cans, press formability is an important factor in terms of enhancing productivity of cans by preventing a press machine from being shut down due to the maintenance of a mold.

Further, in manufacturing an alkali battery can by press forming, usually, it is considered unprofitable unless a mold can withstand the manufacture of 700,000 to 1,000,000 cans (shots). Accordingly,from a viewpointofensuringstable press formability, wear of a mold or exchange frequency of a mold are regarded as important factors.

Further, from a viewpoint of environment, there has been a demand for the reduction of an environmental load by performing degreasing of a press product after press forming using an aqueous solution by promoting the use of a non-organic solvent or non-alkali cleaning. Accordingly, there has been a demand for a Ni-plated steel sheet which enables stable press forming using a water-based emulsion or a press liquid of low viscosity.

For example, following prior art documents can be named.

Patent document 1 (Japanese Patent 4051012) discloses a Ni-plated steel sheet for a battery can where an Fe-Ni diffusion layer or an Fe-Ni diffusion layer and a Ni-plated layer are provided to a surface of a steel sheet which corresponds to an outer surface of a battery can, a Ni-plated layer is further formed on the layer, and a surface roughness Ra of the Ni-plated layer is set to 0.3 µm or more.

Patent document 2 (Japanese Patent 4051021) discloses a Ni-plated steel sheet for manufacturing a battery can where an Fe-Ni diffusion layer is formed on a surface of a steel sheet corresponding to an outer surface of the battery can, and a Ni-plated layer is formed on the Fe-Ni diffusion layer, surface roughness Ra of the Ni-plated layer is 0.1µm or more and 1µm or less, and its Rmax is 1µm or more and 10µm or less.

Further, Japanese Patent 3631143 (patent document 3) discloses that the flow of batteries on a conveyor is excellently improved by applying bright Ni-Co alloy plating to an outer surface of the battery can, and there is also the description that the exchange frequency of a press mold can be decreased by applying bright Ni-Coplating to an outer surface of the battery can.

### Prior Art Document

### Patent Document

- Patent document 1:: Japanese Patent 4051012
- Patent document 2:: Japanese Patent 4051021
- Patent document 3:: Japanese Patent 3631143

### SUMMARY OF THE INVENTION

### PROBLEMS THAT THE INVENTION IS TO SOLVE

There is no description relating to the exchange frequency of a press mold in patent document 1 and document 2. That is, the Ni plated steel sheets described in patent document 1 and patent document 2 have drawbacks that stable press formability cannot be acquired, scratches are generated on a battery can by can making, and severe seizure and wear occur on a mold so that it is necessary to exchange the mold frequently.

The molded can disclosed in patent document 3 which is formed using the Ni-Co alloy plated steel sheet can improve press formability and the flow of batteries on a conveyor. However, contact resistance is increased due to oxidation of a Ni-Co alloy plating layer so that there still remains a drawback with respect to battery properties after a lapse of time.

Accordingly, it is an object of the present invention to provide a Ni-plated steel sheet for a battery can which can overcome the above-mentioned drawbacks and has excellent property in press formability and the suppression of wear of a mold.

Further, it is another object of the present invention to provide a Ni-plated steel sheet for a battery can which can maintain excellent alkali battery properties even after a lapse of time.

### MEANS FOR SOLVING THE PROBLEMS

(1) According to the present invention, there is provided a Ni-plated steel sheet for a battery can having excellent press formability, wherein
   an Fe-Ni diffusion layer and a Ni layer formed on the Fe-Ni diffusion layer are formed on a surface of a steel sheet corresponding to an outer surface of the battery can,
   a semi-bright Ni plating layer is formed on the Ni layer,
   a Ni coating weight of the Fe-Ni diffusion layer and the Ni layer formed on the Fe-Ni diffusion layer is set equal to or smaller than a Ni coating weight of the semi-bright Ni plating layer,
   a Ni coating weight of the semi-bright Ni plating layer is 2.25g/m² or more,
   surface roughness Ra1 of a surface of the semi-bright Ni plating layer in an area of 2.5µm × 2.5µm which is measured by an atomic force microscope falls within a range from 3 to 11nm, and
   surface roughness Ra2 measured by a traceable roughness gauge is 0.3µm or more and 0.8µm or less.
(2) In the Ni-plated steel sheet for a battery can having excellent press formability having the above-mentioned constitution (1), the Ni coating weight of the Fe-Ni diffusion layer and the Ni layer formed on the Fe-Ni diffusion layer is 1 to 5g/m².

### ADVANTAGEOUS EFFECTS OF THE INVENTION

The present invention can provide a Ni-plated steel sheet for a battery can having the excellent press formability which is excellent in the suppression of wear of a mold so that, in forming a battery can, the generation of scratches on a formed can is suppressed and also seizure hardly occurs on the mold. Mode for Carrying Out the Invention

An embodiment of the present invention is explained in detail hereinafter.

### <Definition>

Definition of Ra is described in JIS B0601-1994. Ra is an arithmetic average height of roughness curve and an average value of absolute value deviation from an average line. Ry is a maximum height and indicates a height from the lowermost bottom part to the uppermost top part for every reference length.

In the present invention, surface roughness Ra in an area of 2.5µm × 2.5µm which is measured by an atomic force microscope is expressed as surface roughness Ra1, and surface roughness Ra of the surface in an area of 2.5µm × 2.5µm which is measured by a traceable roughness gauge is described as surface roughness Ra2.

### <Steel sheet>

Usually, a low carbon aluminum-killed hot-rolled coil is used as a substrate of a Ni-plated steel sheet for a battery can.

Further, a coil which is made of extremely-low carbon steel which contains 0.003 weight% or less of carbon, or a coil which is made of non-aging continuous cast steel manufactured by adding niobium and titanium to the extremely-low carbon steel is used.

### <Pretreatment before plating>

As pretreatment performed before surface treatment, usually, a scale (oxide film) formed on a surface of a cold-rolled steel sheet is removed by applying electrolytic cleaning to a cold-rolled sheet using an alkali solution containing caustic soda as a main agent or degreasing by immersing a cold-rolled sheet in such an alkali solution. After the scale is removed, the steel sheet is rolled to a product thickness in a cold-rolling step.

<Annealing>

After rolling oil which adheres to the steel sheet in rolling is cleaned by electrolytic cleaning, the steel sheet is annealed. Annealing may be performed by either one of continuous annealing and box annealing, and is not limited specifically. After annealing is applied to the steel sheet, a shape of the steel sheet is modified.

### <Ni plating>

Next, Ni plating is applied to the steel sheet. Ingeneral, although a nickel sulfate bath which is referred to as a watt bath is mainly used as a Ni plating bath, besides the Ni sulfate bath, a sulfamic acid bath, a fluoroborate bath, a chloride bath or the like can be used. A Ni coating weight of Ni plating in performing plating using such a bath is preferably set to 1 to 5g/m².

In a case where the Ni coating weight is less than 1g/m², when heat diffusion treatment is performed, a Ni layer which is softened (softened Ni layer) is not formed and the whole layer becomes the Fe-Ni diffusion layer and hence, the steel sheet becomes disadvantageous in terms of corrosion resistance.

On the other hand, the reason the Ni coating weight is set to 5g/m² or less is to prevent a thickness of the Fe-Ni diffusion layer from becoming larger than necessary in an annealing step.

That is, there exists a tendency that when a Ni coating weight is large, a thickness of the Fe-Ni diffusion layer is usually increased, and the Fe-Ni diffusion layer is harder than the Ni layer or an iron base material softened by annealing. Accordingly, there is a possibility that when the Fe-Ni diffusion layer having a thickness larger than necessity is formed, cracks are generated in the Fe-Ni diffusion layer at the time of forming a battery can leading to the exposure of the iron base material thus adversely influencing the corrosion resistance. Accordingly, the Ni coating weight necessary for forming the Fe-Ni diffusion layer is set to 1 to 2.25g/m².

Further, when the thickness of the Fe-Ni diffusion layer is large, in press-forming a battery can, a heavy load is applied to the steel sheet for working a thick and hard plated film and hence, a load is applied to a mold thus giving rise to a possibility that wear on the mold is induced.

### <Ni-plating bath>

With respect to electrolysis conditions for acquiring a Ni plating thickness, a case where a typical watt bath is used is explained. In this case, the plating thickness canbe acquired under the electrolysis conditions where a bath has the bath composition containing 200 to 350g/L of nickel sulfate, 20 to 50g/L of nickel chloride and 20 to 50g/L of boric acid, has pH of 3.6 to 4.6 and has a bath temperature of 50 to 65°C, current density is set to 5 to 50A/dm² and the number of coulomb is set to approximately 300 to 1500C/dm². Here, besides matte Ni plating where an organic compound is not added to a plating bath except for a pit prevention agent, semi-bright Ni plating where an organic compound referred to as leveling agent which makes a precipitated crystal surface of a plating layer smooth is added to a plating bath, and bright Ni plating where an organic compound which contains sulfur component for making a plating layer bright by making the Ni plating crystal structure fine with the further addition of a leveling agent is added to a plating bath are named. However, Ni plating which is formed using a bath where an organic compound containing a sulfur component is added to the bath is not preferable as Ni plating of the present invention.

This is because, in thermal diffusion treatment which follows Ni plating as a next step, the presence of the compound containing sulfur causes brittleness thus deteriorating various properties such as corrosion resistance.

### <Formation of diffusion layer>

Next, heat treatment for forming an Fe-Ni diffusion layer is performed after Ni plating. This heat treatment is provided for increasing adhesiveness between base steel and a plating layer. The heat treatment also forms an Fe-Ni diffusion layer, and a softened Ni plating layer is left on the Fe-Ni diffusion layer.

As a method for diffusing Ni by heat treatment, a method which uses a continuous annealing furnace or a method which uses a box-like annealing furnace is named. In the method which uses the continuous annealing furnace, a Ni diffusion temperature which falls within a range from 600°C to 700°C and a Ni diffusion time which falls within a range from 30 seconds to 120 seconds are used in usual Ni diffusion by heating. An annealing atmosphere may be a non-oxidization protective gas atmosphere or a reduction protective gas atmosphere.

When the heat treatment is performed at a temperature below 600°C or for less than 30 seconds, the Ni plating which is applied to the steel sheet does not form the Fe-Ni diffusion layer. On the other hand, when the heat treatment is performed at a temperature exceeding 700°C or for more than 120 seconds, all Ni in the Ni plating which is applied to the steel sheet diffuses into the base steel thus forming the Fe-Ni diffusion layer and hence, the softened Ni layer cannot be held on the diffusion layer. In the present invention, as a heat treatment method by box annealing, it is possible to adopt the heat treatment which uses a protective gas consisting of 75% of hydrogen and 25% of nitrogen produced by an ammonia crack method referred to as hydrogen rich annealing with favorable heat transfer may be used. In this method, favorable uniformity of temperature distribution is acquired in the inside of a steel strip in the longitudinal direction as well as in the widthwise direction of the steel strip and hence, the method has an advantageous effect that the irregularities in the Fe-Ni diffusion layer in the inside of the steel strip or the irregularities in the Fe-Ni diffusion layer between steel strips can be decreased.

### <Temper rolling>

After diffusion treatment, the steel sheet is rolled by temper rolling so that mechanical properties are imparted to the steel sheet, and the surface roughness of a surface of the Ni plating layer which forms a surface becoming an outer surface of a can is adjusted to a predetermined roughness.

That is, the temper rolling is performed such that surface roughness Ra2 measured by a traceable roughness gauge becomes 0.3µm or more and 0.8µm or less.

This is because by adjusting the surface roughness Ra2 to a value which falls within such a range, it is possible to set the surface roughness Ra2 of semi-bright Ni plating (re-plating) which is a succeeding step to a value which falls within a predetermined range.

### <Semi-bright Ni plating (re-plating)>

After adjusting surface roughness to predetermined roughness by temper rolling, semi-bright Ni plating of 2.25g/m² or more is applied to the soft Ni layer being a surface which will become an outer surface of a can.

When a coating weight of semi-bright Ni plating is less than 2.25g/m², a semi-bright Ni plating effect does not appear and hence, sufficient press formability cannot be acquired. Further, there exists a possibility that scratches are generated on a wall of a formed can or seizure is generated on a mold.

Semi-bright Ni plating is characterized by forming a harder film than matte Ni plating does. Further, semi-bright Ni plating is also characterized in that oxidization advances slowly compared to bright Ni plating and hence, the contact resistance is not increased thus preventing semi-bright Ni plating from adversely influencing battery characteristics. Accordingly, semi-bright Ni plating is suitable for acquiring both press formability and battery characteristics by forming semi-bright Ni plating on the soft Ni layer being a surface which will become an outer surface of a can.

The reason a Ni coating weight of the Fe-Ni diffusion layer and the softened Ni layer formed on the Fe-Ni diffusion layer is set equal to or smaller than a Ni coating weight of the semi-bright Ni plating layer is as follows. When the Ni coating weight of the Fe-Ni diffusion layer softer than the semi-bright Ni plating layer and the softened Ni layer formed on the Fe-Ni diffusion layer exceeds the Ni coating weight of the semi-bright Ni plating layer, the semi-bright Ni plating layer cannot acquire sufficient surface hardness so that wear resistance of the semi-bright Ni plating layer against a mold which is an advantageous effect of the semi-bright Ni plating layer cannot be acquired.

### <Semi-bright Ni plating bath>

As semi-bright Ni plating bath composition, the following watt bath can be named.

### Bath composition

nickel sulfate 6 hydrate: 300±50g/L
nickel chloride 6 hydrate: 45±5g/L
boric acid: 30±5g/L
pit preventing agent: 2ml/L
semi-brightening agent 1 (polyoxyethylene adduct of unsaturated alcohol): 3.0 to 6.0g/L
semi-brightening agent 2 (unsaturated carboxylic acid formaldehyde): 3.0 to 6.0g/L
pH: 4.5 to 5.0
bath temperature: 65°C or above
   air agitation

Although the explanation is made later with respect to surface roughness, to realize semi-bright Ni plating where surface roughness Ra1 of a surface of a semi-bright Ni plating layer in an area of 2.5µm × 2.5µm which is measured by an atomic force microscope falls within a range from 3 to 11nm, it is important to control concentration of semi-brightening agent and to make a value of pH fall within the above-mentioned range.

Particularly, the concentration of the semi-brightening agent largely influences surface roughness Ra1 of a plating film which is measured by an atomic force microscope and contact resistance of the semi-bright Ni plating film.

When a total amount of the semi-brightening agents 1, 2 is less than 6.0g/L, surface roughness Ra1 falls outside a specified range.

Further, when a total amount of the semi-brightening agents 1, 2 exceeds 12.0g/L, the semi-bright Ni plating film is liable to be oxidized leading to the lowering of a battery characteristic due to the increased of contact resistance.

Further, to realize semi-bright Ni plating where surface roughness Ra1 of a surface of a semi-bright Ni plating layer in an area of 2.5µm × 2.5µm which is measured by an atomic force microscope falls within a range from 3 to 11nm, the following citric acid bath can be also used.

### Bath composition

nickel sulfate 6 hydrate: 300±50g/L
nickel chloride 6 hydrate: 45±5g/L
boric acid: 30±5g/L
pit preventing agent: 2ml/L
pH: 4.5 to 5.0
bath temperature: 65°C or above
   air agitation

Also with the use of citric acid bath, it is possible to acquire a hard semi-bright Ni plating film where contact resistance is not increased after a lapse of time.

### <Surface roughness Ra1 of surface of semi-bright Ni plating>

A surface of the semi-bright Ni plating is adjusted such that surface roughness Ra1 of the surface of semi-bright Ni plating in an area of 2.5µm × 2.5µm which is measured by an atomic force microscope falls within a range of 3 to 11nm.

The resolution of an atomic force microscope is at a level which enables the observation of atoms on a surface of a first layer, and surface roughness Ra1 of a surface of a semi-bright Ni plating layer in an area of 2.5µm × 2.5µm which is measured by an atomic force microscope depends on a grain size at the time of forming semi-bright Ni plating. That is, the smaller the grain size of semi-bright Ni plating, the smaller surface roughness Ra1 becomes. When the grain size of semi-bright Ni plating is small, the semi-bright Ni plating film becomes hard and hence, friction between the semi-bright Ni plating film and the mold at the time of pressing can be made small. Accordingly, wear on the mold is minimally generated so that the exchange frequency of the mold can be reduced. That is, by setting surf ace roughness Ra1 to a small value, press formability and mold wear suppression effect can be enhanced.

In the present invention, by setting surface roughness Ra1 of a surface of a semi-bright Ni plating layer in an area of 2.5µm × 2.5µm which is measured by an atomic force microscope to a value which falls within a range from 3 to 11nm, it is possible to acquire press formability and mold wear suppression effect.

### <Surface roughness Ra2 of surface of semi-bright Ni plating>

The resolution of a traceable roughness gauge is usually at a several µm order, and surface roughness Ra2 of a surface of a semi-bright Ni plating layer which is measured by a traceable roughness gauge depends on roll roughness and a rolling load in a temper rolling step. Although semi-bright Ni plating is applied after temper rolling in this embodiment of the present invention, a grain size of a plating film which is formed by applying semi-bright Ni plating has a nm order so that such semi-bright Ni plating does not influence surface roughness Ra2. The fact that the semi-bright Ni plating does not influence surface roughness Ra2 is conf irmedby measuring surface roughness Ra2 after temper rolling is applied and surface roughness Ra2 after semi-bright Ni plating is applied and by comparing these surface roughnesses Ra2 with each other.

In the temper rolling step, when the roll roughness is made large, the roughness of the plated steel sheet to be rolled by temper rolling becomes large, and when the rolling load is made large, the roughness of an outermost surface of a plated steel sheet becomes large. By adjusting the rolling roughness and the rolling load, the roughness of the outermost surface of the plated steel sheet can be adjusted.

Rolls used for temper rolling are not specifically limited, and EDT rolls can also be used besides shot dull rolls. That is, the rolls for temper rolling are not specifically limited provided that a method where the roughness falls within a range called for in Claims is adopted. Further, a temper rolling facility is of a usual type and is not specifically limited.

In the present invention, surface roughness Ra2 is set to a value which falls within a range of 0.3µm or more and 0-8µm or less.

The reason is that in a case where surface roughness Ra2 is less than 0.3 µm when the mold comes in contact with a bottom surface of a can at the time of pressing, the bottom surface of the can cannot impregnate a minimum amount of lubricant so that scratches or seizure are liable to be generated.

On the other hand, when surface roughness Ra2 exceeds 0.8µm, an amount of powder generated from the roll for tempering in the temper rolling step is largely increased thus inducing quality defects such as dents caused by powder particles. Accordingly, surface roughness Ra2 exceeding 0.8µm is not preferable from a viewpoint of the manufacture.

To prevent the generation of scratches and seizure, it is necessary to impregnate a large amount of lubricant between a die of a mold and a steel sheet. That is, a portion of a steel sheet which firstly comes into contact with the die will become a bottom portion of a battery can, and as the bottom portion is minimally worked, roughness of the steel sheet remains. Accordingly, by setting surface roughness Ra2 after re-plating to a value which falls within a range of 0.3µm or more and 0.8µm or less, it is possible to apply an amount of lubricant which can prevent the generation of scratches on a wall of a battery can or the generation of seizure on a mold to a surface of the steel sheet.

### <Measurement of surface roughness Ra2>

A measuring method of Ra2 is not specifically limited provided that a roughness meter adopting a traceable surface roughness measuring method is used. A measurement device is based on the description of JIS-B0651-2001.

Although no other conditions are particularly specified with respect to the measuring methods except for that measurement is performed using the traceable surface roughness measurement device which is calibrated using a reference sheet, the measurement is performed as follows in this invention.

One example of measuringmethod is describedhereinafter.

As the measurement device, a traceable surface roughness measurement device (surfcom series) made by TOKYO SEIMITSU CO., LTD. is used. JIS' 94 is adopted as the measuring condition. That is, the measurement is performed under the conditions where an evaluation length: 5mm, a measuring speed: 0.4mm/s, a cut-off value: 1.0mm, a kind of a filter: Gaussian, a measuring range: ±50µm, gradient correction: straight, andacut-off ratio: 400.

### <Press forming>

A battery can is formed by press-forming aNi-plated steel sheet.

Although a size of the battery can is not specifically limited, AA and AAA which are popularly used in a digital camera or the like are main sizes.

As a method of forming a battery can, a drawing and ironing method by pressing is used, and the battery can is formed such that a thickness of a can wall becomes equal from a bottom of the formed can (positive pole terminal part in a form of the battery can) toward an opening part excluding a calking portion of the battery can.

In the forming step, a 1st cup is formed by drawing a Ni-plated steel sheet, the cup is subjected to drawing through six steps in total and, thereafter, the cup is formed into a battery can through four steps.

As a material of the mold used at the time of press forming, sintered hard alloy is preferably used. However, a kind of material of the mold is not specifically limited. As a lubricant (press oil) used at the time of press forming, two kinds of lubricants having low viscosity, that is, a mineral-oil-based press oil and a water-soluble-emulsion-type press oil can be named.

As the press oil having low viscosity, a press oil where kinematic viscosity (40°C) is 40mm²/s or less is preferably used. It is also possible to add a slight amount of additive such as molybdenum to the press oil.

In a case where the press oil having low viscosity is used, cleaning with a neutral surface active agent can be performed without requiring an organic solvent or alkali cleaning in performing the cleaning after forming a battery can and hence, the press oil works extremely significantly in terms of an environmental load as well as a cost. Accordingly, the use of the press oil is significant.

As the press oil having low viscosity, press oil shown in Table 1 can be favorably named.

**[Table 1]**

| name of product | | | mineral oil press oil |
|---|---|---|---|
| density | (15°C) | g/cm³ | 0.89 |
| flash point | (COC) | °C | 190 |
| kinematic viscosity | (40°C) | mm²/s, | 30 |
| acid value | | mgKOH/g | 1.9 |
| color | | ASTM | L2.5 |
| corrosion of copper sheet | | 100°CX1h | 1a |
| pour point | | °C | -15 |

As the water-soluble-emulsion-type press oil, in general, a lubricant for preventing seizure can be used. The reason the water-soluble-emulsion-type press oil is used as press oil is that such a water-soluble-emulsion-type lubricant is water-soluble so that the use of an organic solvent is unnecessary for cleaning after manufacturing a can and hence, cleaning which takes into account an environment can be easily performed. Accordingly, there is a possibility that the water-soluble-emulsion-type press oil will be used widely in future.

Composition examples of water soluble emulsion press oil are named hereinafter.

| components | rate | name of specific components |
|---|---|---|
| mineral oil | 40-50% | mineral oil or fatty acid ester |
| higher alcohol | 10% | t-butyl alcohol |
| surface-active agent | 5% | anionic or nonionic surface-active agent |
| alkanolamine | 5-10% | triethanolamine |
| anti-corrosion agent | 1% | benzotriazole |
| water | balance | |

The above-mentioned composition is mixed at the above-mentioned rates, and is further diluted with water until the concentration becomes 2 to 10% thus producing water-soluble emulsion lubricant.

### <Example 1>

A steel sheet having a sheet thickness of 0.25mm is manufactured using a low carbon aluminum-killed hot-rolled coil through cold rolling and annealing, and a Ni plated steel sheet for a battery can according to the present invention is prepared using the steel sheet as follows. Matted Ni plating is applied to a surface of the steel sheet which will become an outer surface of a can with a Ni coating thickness of 1.5g/m².

Further, matted Ni plating is applied to a surface of the steel sheet which will become an inner surface of the can with aNi coating thickness of 10g/m . After applying Ni plating, continuous annealing is performed at a temperature of 700°C for 30 seconds thus diffusing Ni in the Ni plating whereby an Fe-Ni diffusion layer and the softened Ni layer on the Fe-Ni diffusion layer are formed.

A Ni coating weight of the Fe-Ni diffusion layer and the softened Ni layer above the Fe-Ni diffusion layer is regarded as substantially equal to a coating weight of a matted Ni plating layer before diffusion treatment is applied.

After diffusion treatment is performed, temper rolling is performed such that, with respect to surface roughness of a surface of the steel sheet which will become an outer surface of a can, surface roughness Ra2 measured by a traceable roughness gauge becomes 0.3µm.

Then, semi-bright Ni plating of 2.3g/m² is applied to the soft Ni layer by re-plating thus manufacturing a Ni-plated steel sheet for a battery can.

After applying semi-bright Ni plating, surface roughness Ra1 of a surface of the semi-bright Ni plating layer in an area of 2.5µm × 2.5µm within a measurement range of 10µm square is measured by an atomic force microscope (AFM), and the surface roughness Ra1 is 3nm.

When the surface roughness of the steel sheet is again measured by a traceable roughness gauge, it is confirmed that surface roughness Ra2 is 0.3µm.

### <Examples 2 to 12>

In the same manner as the example 1, Ni-plated steel sheets for a battery can of examples 2 to 12 are prepared.

In the examples 2 to 12, however, matted Ni plating applied to a surface of the Ni-plated steel sheet which becomes an outer surface of a battery can, the surface roughness Ra2 (measured by the traceable roughness gauge) of the surface of the steel sheet which will become the outer surface of the can formed by temper rolling, the thickness of re-plating applied to the soft Ni layer, and the surface roughness Ra1 measured by an atomic force microscope (AFM) after semi-bright Ni plating are respectively changed as shown in Table 2.

### <Comparison examples 1 to 6>

Ni-plated steel sheets of comparison examples 1 to 6 are prepared in such a manner that steel sheets substantially equal to the steel sheets of the examples are used, and surface roughness Ra2 measured by a traceable roughness gauge or a semi-bright Ni plating condition in re-plating is set to a value which falls outside the range of the present invention.

### <Evaluation>

Table 2 shows a result of can making using the Ni plated steel sheets of the examples and the comparison examples. In can making, the Ni plated steel sheets of the examples and the comparison examples are formed into battery cans for AA-size alkali batteries by a drawing and ironing method using two kinds of lubricants consisting of low-concentration mineral oil press oil and a water-soluble emulsion.

The battery can for a AA size alkali battery is formed through 10 steps. A material of a portion of a mold which is brought into contact with the plated steel sheet is made of a WC-Ni material (NC-8) which uses a Ni binder and, in a next step, a formed can having a can wall thickness of 0.16mmt which becomes a battery can for a U-3 size alkali battery is obtained.

Step 1: Cupping
   cup diameter: 31.42mm
   drawing ratio: 1.85
   blank diameter: 52mmφ
Steps 2 and 3: Drawing
Steps 4, 5 and 6: Drawing and ironing
Steps 7 to 10: rough shoulder forming, finish shoulder forming, step forming, trimming

For evaluating the Ni plated steel sheets of the examples and the comparison examples, seizure on a mold, the presence or the non-presence of scratches on a formed can, and exchange frequency of the mold are investigated. Further, 20 cans are extracted from the obtained battery cans and alkali batteries are manufactured using these battery cans, and the battery properties of these alkali batteries are evaluated.

The battery properties after preserving the alkali batteries at a temperature of 60°C for 20 days are obtained.

The evaluation of battery properties is carried out in accordance with a photo flash mode of a typical use stipulated in an LR6 battery evaluation item of ANSI, C18. 1M, part 1-2002.

"good" is given when the minimum number of times of flashes described in ANSI is 210 or more and "bad" is given when the minimum number of times of flashes described in ANSI is less than 210.

Specific discharge conditions are set to 1000mA, 10s/min, and frequency of 1hr/day.

The Ni-plated steel sheets of the examples 1 to 12 which fall within the scope of the present invention exhibit no "scratches on can" and no "seizure on mold" as can be clearly understood from Table 2. Accordingly, a mold can withstand pressing of 700,000 cans before being exchanged due to wear of the mold generated by press forming. The Ni-plated steel sheets of the examples 1 to 12 are proved excellent as Ni-plated steel sheets for forming battery cans.

Further, battery cans which are manufactured using these Ni-plated steel sheets of these examples also exhibit excellent battery properties.

On the other hand, the Ni-plated steel sheets of the comparison examples 1 to 6 which fall outside the scope of the present invention exhibit "scratches on a can" and "seizure on mold" so that the number of cans which can be formed by molding is decreased and thereby the exchange frequency of the mold is increased, and battery cans which are manufactured using these Ni-plated steel sheets also exhibit deteriorated battery properties.

**[Table 2]**

| Examples 3 to 5 and 10 to 12 are not part of the invention. | | | | | | | | | |
|---|---|---|---|---|---|---|---|---|---|
| No. | kind of press oil | thicknesss of matted Ni plating (g/m²) | roughness measured by traceable roughness gauge Ra2 (µm) | thicknes of re-plating (g/m²) | kind of plating | Ra1 measured by AFM (nm) | scratches on can | mold exchange frequency (10,000 cans) | battery characteristic |
| example 1 | low-viscosity mineral oil | 1.5 | 0.3 | 2.3 | semi-bright | 3 | not present | 110 | good |
| example 2 | low-viscosity mineral oil | 1.5 | 0.5 | 3 | semi-bright | 5 | not present | 95 | good |
| example 3 | low-viscosity mineral oil | 1.8 | 1.0 | 5 | semi-bright | 8 | not present | 90 | good |
| example 4 | low-viscosity mineral oil | 1.5 | 1.1 | 8.9 | semi-bright | 10 | not present | 90 | good |
| example 5 | law-viscosity mineral oil | 2.2 | 1.5 | 10 | semi-bright | 4 | not present | 100 | good |
| example 6 | low-viscosity mineral oil | 2 | 0.7 | 5 | semi-bright | 9 | not present | 90 | good |
| example 7 | low-viscosity mineral oil | 1.5 | 0.6 | 6 | semi-bright | 7 | not present | 80 | good |
| example 8 | low-viscosity mineral oil | 2.2 | 0.8 | 8 | semi-bright | 5 | not present | 90 | good |
| example 9 | low-viscosity mineral oil | 1.2 | 0.5 | 9 | semi-bright | 6 | not present | 95 | good |
| example 10 | low-viscosity mineral oil | 1.3 | 1.8 | 11 | semi-tright | 8 | not present | 90 | good |
| example 11 | water-soluble emulsion | 1.6 | 1.2 | 4 | semi-bright | 11 | not present | 70 | good |
| example 12 | water-soluble emulsion | 1.8 | 1.3 | 12 | semi-bright | 5 | not present | 75 | good |
| comparison example 1 | low-viscosity mineral oil | 1.58 | 0.2 | 8 | semi-bright | 5 | present | 40 | good |
| comparison example 2 | low-viscosity mineral oil | 1.5 | 0.4 | 9 | semi-bright | 16 | present | 30 | good |
| comparison example 3 | low-viscosity mineral oil | 1.5 | 1.8 | 1.9 | semi-bright | 6 | not present | 35 | good |
| comparison example 4 | low-viscosity mineral oil | 6 | 1.2 | 1.1 | semi-bright | 20 | not present | 25 | good |
| comparison example 5 | low-viscosity mineral oil | 1.5 | 1.1 | 2.4 | Ni-Co alloy plating | 4 | not present | 90 | bad |
| comparison example 6 | low-viscosity mineral oil | 2.2 | 1.1 | 5 | bright plating containing S | 5 | not present | 90 | bad |

### Industrial applicability

According to the Ni-plated steel sheet for battery cans of the present invention which has excellent press formability, it is possible to provide a Ni-plated steel sheet where the generation of scratches at the time of forming a battery can by a press forming is suppressed and the seizure is minimally generated on a mold and hence, the present invention possesses extremely high industrial applicability.

## Claims

1. A Ni-plated steel sheet for a battery can having excellent press formability, wherein
an Fe-Ni diffusion layer and a Ni layer formed on the Fe-Ni diffusion layer are formed on a surface of a steel sheet corresponding to an outer surface of the battery can,
a semi-bright Ni plating layer is formed on the Ni layer,
a Ni coating weight of the Fe-Ni diffusion layer and the Ni layer formed on the Fe-Ni diffusion layer is set equal to or smaller than a Ni coating weight of the semi-bright Ni plating layer,
the coating weight of the semi-bright Ni plating layer is 2.25g/m² or more,
surface roughness Ra1 of a surface of the semi-bright Ni plating layer in an area of 2.5µm × 2.5µm measured by an atomic force microscope falls within a range from 3 to 11nm, and
surface roughness Ra2 of the surface of the semi-bright Ni plating layer measured by a traceable roughness gauge is 0.3µm or more and 0.8µm or less.

2. The Ni-plated steel sheet for a battery can having excellent press formability according to claim 1, wherein the Ni coating weight of the Fe-Ni diffusion layer and the Ni layer formed on the Fe-Ni diffusion layer is 1 to 5g/m².

## Patentansprüche

1. Ein nickelplattiertes Stahlblech für einen Batteriebehälter mit hervorragender Pressformbarkeit, wobei
eine Fe-Ni-Diffusionsschicht und eine Nickelschicht, die auf der Fe-Ni-Diffusionsschicht gebildet ist, auf einer Oberfläche eines Stahlblechs gebildet sind, die einer äußeren Oberfläche des Batteriebehälters entspricht,
eine halbglänzende Nickel-Plattierungsschicht auf der Nickelschicht gebildet ist,
ein Nickelbeschichtungsgewicht der Fe-Ni-Diffusionsschicht und der Nickelschicht, die auf der Fe-Ni-Diffusionsschicht gebildet ist, gleichgesetzt ist oder kleiner als ein Nickelbeschichtungsgewicht der halbglänzenden Nickel-Plattierungsschicht ist,
das Beschichtungsgewicht der halbglänzenden Nickel-Plattierungsschicht 2,25 g/m² oder mehr beträgt,
Oberflächenrauigkeit Ra1 einer Oberfläche der halbglänzenden Nickel-Plattierungsschicht in einer Fläche von 2,5µm × 2,5µm, gemessen durch ein Atomkraftmikroskop, in einem Bereich von 3 bis 11 nm liegt und
Oberflächenrauigkeit Ra2 der Oberfläche der halbglänzenden Nickel-Plattierungsschicht, gemessen durch einen nachweisbaren Rauigkeitsmesser (traceable roughness gauge), 0,3µm oder mehr und 0,8µm oder weniger beträgt.

2. Das nickelplattierte Stahlblech für einen Batteriebehälter mit hervorragender Pressformbarkeit gemäß Anspruch 1, wobei das Nickelbeschichtungsgewicht der Fe-Ni-Diffusionsschicht und der Nickelschicht, die auf der Fe-Ni-Diffusionsschicht gebildet ist, 1 bis 5 g/m² beträgt.

## Revendications

1. Feuille d'acier nickelé pour boîte de batterie ayant une excellente aptitude au pressage, dans laquelle
une couche de diffusion de Fe-Ni et une couche de Ni formée sur la couche de diffusion de Fe-Ni sont formées sur une surface d'une feuille d'acier correspondant à une surface extérieure de la boîte de batterie,
une couche de placage de Ni semi-brillante est formée sur la couche de Ni,
un poids de revêtement de Ni de la couche de diffusion de Fe-Ni et de la couche de Ni formée sur la couche de diffusion de Fe-Ni est identique ou inférieur à un poids de revêtement de Ni de la couche de placage de Ni semi-brillante,
le poids de revêtement de la couche de placage de Ni semi-brillante est supérieur ou égal à 2,25 g/m²,
la rugosité de surface Ra1 d'une surface de la couche de placage de Ni semi-brillante dans une zone de 2,5 µm x 2,5 µm mesurée par un microscope à forces atomiques est comprise dans la plage allant de 3 à 11 nm, et
la rugosité de surface Ra2 de la surface de la couche de placage de Ni semi-brillante mesurée par une jauge de rugosité traçable est de 0,3 µm ou plus et de 0,8 µm ou moins.

2. Feuille d'acier nickelé pour boîte de batterie ayant une excellente aptitude au pressage selon la revendication 1, dans laquelle le poids de revêtement de Ni de la couche de diffusion de Fe-Ni et de la couche de Ni formée sur la couche de diffusion de Fe-Ni est de 1 à 5 g/m².
